(19) **Europäisches Patentamt**

**European Patent Office**

**Office européen des brevets**

(11) **EP 0 939 199 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(51) Int Cl.7: **F01K 21/04**, F02C 3/20, F02C 3/34, F02B 47/10

(21) Anmeldenummer: **98810154.9**

(22) Anmeldetag: **25.02.1998**

(54) **Kraftwerksanlage und Verfahren zum Betrieb einer Kraftwerksanlage mit einem CO2-Prozess**

Power plant and process for operating a power plant with a CO2-cycle

Centrale d'énergie et procédé de fonctionnement d'une centrale d'énergie avec un cycle de CO2

(84) Benannte Vertragsstaaten:
**DE GB**

(73) Patentinhaber: **ALSTOM Technology Ltd**
**5400 Baden (CH)**

(72) Erfinder:
 • **Frutschi, Hansulrich**
 **5223 Riniken (CH)**
 • **Wettstein, Hans, Dr.**
 **5442 Fislisbach (CH)**

(43) Veröffentlichungstag der Anmeldung:
**01.09.1999 Patentblatt 1999/35**

(56) Entgegenhaltungen:
WO-A-95/02115    WO-A-97/44574
DE-A- 3 643 401    DE-A- 3 924 908
DE-A- 4 303 174    DE-C- 4 407 619
FR-A- 2 202 231    US-A- 4 498 289
US-A- 5 175 995

 • YULIN SHAO ET AL: "NATURAL GAS FIRED COMBINED CYCLE POWER PLANT WITH CO2 CAPTURE" ENERGY CONVERSION AND MANAGEMENT, Bd. 36, Nr. 12, 1.Dezember 1995, Seiten 1115-1128, XP000529061
 • PATENT ABSTRACTS OF JAPAN vol. 017, no. 080 (M-1368), 17.Februar 1993 & JP 04 279729 A (MITSUBISHI HEAVY IND LTD), 5.Oktober 1992,

**Beschreibung**

**Technisches Gebiet**

Die vorliegende Erfindung betrifft ein kraftwerksanlage gemäss Oberbegriff des Anspruchs 1. Die Erfindung betrifft auch ein Verfahren zum Betrieb einer kraftwerksanlage gemäss dem Oberbegriff des Anspruchs 12.

**Stand der Technik**

Maschinen mit innerer Verbrennung verbrennen ihren Brennstoff in komprimierter Atmosphärenluft und vermischen ihre Verbrennungsgase inhärent mit dieser Luft und dem nicht ausgenutzten Restsauerstoff. Die fast immer kohlenstoffhaltige Brennstoffe erzeugen dabei unter anderen $CO_2$, welches als Treibhausgas gilt. Die verbreitete Nutzung fossiler Brennstoffe setzt heute $CO_2$-Mengen frei, welche ein weltweit diskutiertes Risiko für das Weltklima darstellen. Es ist daher bereits eine intensive Suche nach $CO_2$-freien Technologien im Gange.
Die Energieversorgung ist heute von der Nutzung fossiler Brennstoffenergien in Maschinen mit innerer Verbrennung bestimmt, wobei die Entsorgung des stark verdünnten $CO_2$ in die Atmosphäre geschieht.

Die $CO_2$-Abscheidung aus den Abgasen mit Entsorgung durch Verflüssigung, Separation und Abschliessung von der Atmosphäre wäre naheliegend. Durch die grosse Volumenströme lässt sich aber ein solches Vorhaben nicht in die Praxis umzusetzen.

Eine weitere bekannte Möglichkeit ist die Rezirkulation von abgekühlten Abgasen in die Ansaugung von Maschinen mit innerer Verbrennung. Dies kann in einem Ausmass geschehen, dass der Sauerstoff der Luft gerade aufgebraucht wird. In diesem Fall bleibt das Abgas aber immer noch mit dem Luftstickstoff vermischt und das $CO_2$-Abscheidungsproblem ist damit nur marginal verkleinert.
Des weiteren, alle luftbetriebenen Verbrennungsmaschinen erzeugen auch Stickoxide, welche als Luftschadstoffe wirken, und deren Entstehung mit kostspieligen Massnahmen bekämpft wird.

DE-A1-43 03 174 offenbart ein Verfahren und eine Anlage zum Erzeugen elektrischer Energie durch Verbrennen von vorzugsweise gasförmigen, fossilen Brennstoffen mit reinem Sauerstoff. Hierzu ist ein geschlossener Kreislauf mit mindestens einer Brennkammer, einer Gasturbine, einem zur Vorwärmung dienenden Abhitzekessel und Verdichtem zum Verdichten des Arbeitsmediums auf Brennkammerdruck vorgesehen, wobei im Kreislauf als Arbeitsmedium ein intertes Gas benutzt wird. Vorzugsweise wird als Arbeitsmedium Kohlendioxid und als Brenngas Erdgas verwendet.

DE-A1-39 24 908 offenbart eine Anlage mit fossiler Verbrennung, wobei die abgearbeiteten Abgase nach Auskondensation des Wasseranteils weiter abgekühlt und anschliessend der Kohlendioxidanteil in Festeis umgewandelt wird. Des weiteren sieht die Erfindung vor, dass die Verbrennung zur Erzeugung stickstofffreier Abgase mit Sauerstoff erfolgt und die abgearbeiteten Abgase als Kreislaufgas zur Absenkung der Flammtemperatur in die Brennzone der fossilen Brennstoffe eingeleitet werden und nur der überschüssige Teil des Kreislaufgases abgezogen und iri Kohlendioxid umgewandelt wird.

US-A-5,175,995 offenbart eine Kraftwerksanlage mit einem Verdichter, einer Brennkammer, einer Gasturbine und mit einem $CO_2$-Kreislauf. Ähnliche Anlagen sind aus *Natural gas fired combined cycle power plant with CO2 capture*, Yulin Shao et al., Energy conversion and management, Bd. 36, Nr. 12, vom 1.12.1995, S. 1115-11128, JP-A-04 279729, WO 97/44574 und US-A-4,498,289 bekannt.

DE-A1-36 43 401 offenbart ein Verfahren und eine Vorrichtung eines abgasfreien Kraftwerks, welches fossil befeuert wird, durch einen eng verzahnten Jouleprozess, mit einem primär und sekundär Clausius-Rankine-Prozess und ggf. mit einem zusätzlichen MHD-Prozess. Es wird eine $CO_2$-Atmoshäre im Kreis geführt und Brenngas mit reinem Sauerstoff verbrannt und verflüssigtes $CO_2$ aus dem Kreislauf genommen.

WO 95/02115 offenbart ein Verfahren zur Nutzung der in einem Kraftwerk anfallenden Abhitze.

DE-C1-44 07 619 offenbart ein Verfahren zur schadstoffarmen Umwandlung von Wärmeenergie, die durch Verbrennen fossiler Brennstoffe bereitgestellt wird, in technische Arbeit, bei dem erfindungsgemäss die durch Verbrennen von fossilen Brennstoffen bereitgestellte Wärmeenergie dem Kreisprozess direkt zugeführt wird, indem die Brennstoffe im Kreisprozess mit technischem Sauerstoff im Beisein aus dem Kreisprozess rückgeführten Kohldioxid zu Gasturbinenarbeitsmittel verbrannt werden. Weiterhin erfindungsgemäss erfolgt der Druckausgleich zwischen Brennkammer und Kohlendioxidrückgewinnung durch Kondensation einerseits und Verdampfung und Vorwärmung des rückzuführenden Kohlendioxides und Brennkammer andererseits durch prozessinterne Kompression und Expansion, die vorzugsweise mit einem leistungsstarken Gasturbolader durchgeführt werden.

**Darstellung der Erfindung**

Hier will die Erfindung Abhilfe schaffen. Der Erfindung, wie sie in den Ansprüchen gekennzeichnet ist, liegt die Aufgabe zugrunde, bei einem Verfahren und einer Schaltung der eingangs genannten Art das anfallende $CO_2$ umweltschonend zu entsorgen, gleichzeitig liegt hier der Erfindung die Aufgabe zugrunde, die ebenfalls anfallenden Luftstickoxide zu eliminieren.

Vorteilhafte und zweckmässige Weiterbildungen der erfindungsgemässen Aufgabenlösungen sind in den weiteren Ansprüchen gekennzeichnet.

**Kurze Beschreibung der Zeichnungen**

Im folgenden werden anhand der Zeichnungen verschiedene Ausführungbeispiele der näher erläutert.

Es zeigen:

Fig. 1 eine Gasturbine mit geschlossenem Kreislauf, mit Wärmetauschern zur Abscheidung von Wasser und $CO_2$.

Fig. 2 eine Gasturbine nach Fig. 1 mit einer zusätzlichen Verdichtung-Zwischenkühlung,

Fig. 3 eine Gasturbine mit geschlossenem Kreislauf und mit einem Dampfkreislauf,

Fig. 4 eine Schaltung gemäss Fig. 3 mit zusätzlicher Verdichtung-Zwischenkühlung,

Fig. 5 eine Schaltung gemäss Fig. 3, wobei mehrere Dampfturbinen in den Dampfkreislauf integriert sind,

Fig. 6 eine Schaltung gemäss Fig. 4, wobei mehrere Dampfturbinen in den Dampfkreislauf integriert sind,

Fig. 7 eine weitere Gasturbinenschaltung mit mehreren Rekuperatoren und Zwischenkühlern,

Fig. 8 einen erfindungsgemässen Gasturbinenprozess mit Isothermverdichter und mit Rekuperation,

Fig. 9 einen Kolbenmaschinenprozess mit dem finalen Zweck gemäss einer der vorangenen Schaltungen.

Alle für das unmittelbare Verständnis der Erfindung unwesentlichen Merkmale sind fortgelassen worden. Gleiche Elemente sind in den verschiedenen Figuren mit den gleichen Bezugszeichen versehen. Die Strömungsrichtung der Medien ist mit Pfeilen angegeben.

**Wege zur Ausführung der Erfindung, gewerbliche Verwendbarkeit**

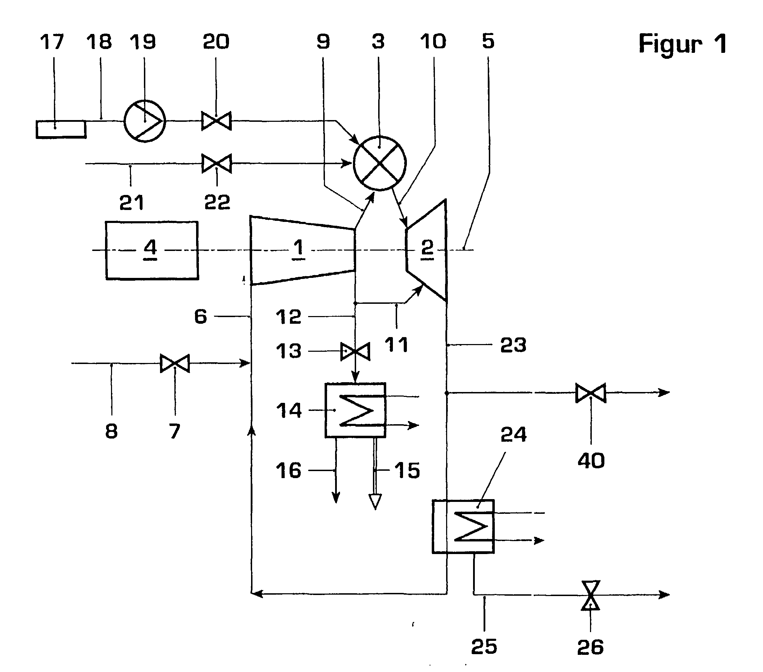

Fig. 1 zeigt eine Gasturbine mit geschlossenem Kreislauf. Diese Gasturbine bzw. Gasturbogruppe besteht aggregatenmässig aus einer Verdichtereinheit 1, einem mit dieser Verdichtereinheit gekoppelten Generator 4, einer mit der Verdichtereinheit gekoppelten Turbine 2, einer zwischen Verdichtereinheit 1 und Turbine 2 wirkende Brennkammer 3. Die Kopplung der Strömungsmaschinen 1 und 2 kann anhand einer gemeinsamen Welle 5 bewerkstelligt werden. Das von der Verdichtereinheit 1 angesaugte Kreislaufmedium 6, bei dem es sich vorwiegend um $CO_2$ handelt, strömt nach erfolgter Kompression in die Brennkammer 3, in welcher die kalorische Aufbereitung dieses Mediums stattfindet, das dann als Heissgase 10 die Turbine 2 beaufschlägt. Die Verdichtereinheit 1 kann zum Anfahren auch über eine Startklappe 7 Luft 8 ansaugen, deren Stickstoff sukzessiv über eine Auslaklappe 40 entlassen wird, so wie dieser durch entstehendes $CO_2$ verdrängt wird. Während nach der Verdichtung der Hauptanteil des komprimierten Umlaufgases 9, wie bereits dargelegt, der Brennkammer 3 zugeführt wird, wird ein erster Nebenstrom 11 als Kühlmittel in die Kühlungspfade der zu kühlenden Aggregate eingeleitet. Bei dieser Schaltung stehen hier zur Kühlung die Brennkammer 3 und die Turbine 2 im Vordergrunde, wobei die Kühlung in geschlossenen und/oder offenen Strömungspfaden durchgeführt werden kann. Ein zweiter Nebenstrom 12 in der Grössenordnung von 4-8% des ganzen verdichteten Ümlaufgases wird zusätzlich abgezweigt. Dieses verdichtete $CO_2$ weist dabei jenen Druck auf, der für die Verflüssigung notwendig ist. Ueber ein Ventil 13, das die Funktion eines Überschussgasventil erfüllt, wird dieser $CO_2$-Anteil aus dem geschlossenen Kreislauf abgelassen. Dieses Umlaufgas besteht überwiegend aus $CO_2$, enthält aber allenfalls auch noch parasitische Gase, welche mit dem Sauerstoff und Brennstoff sowie beim Anfahren mit Luft eingeschleppt worden sind, sowie Umwandlungsprodukte davon, beispielsweise $NO_x$. Nach der Kondensation des $CO_2$ in einem Kühler 14 wird dieser verflüssigte $CO_2$-Massenstrom 15 zur Entsorgung abgeführt, beispielsweise und/oder vorzugsweise auf dem Meeresgrund oder in eine ausgebeutete Erdgaslagerstätte.

Diese Entsorgung an geeigneter Stelle mit geeigneten Mitteln löst schlagartig und nachhaltig die Problematik des Treibhauseffekts durch den ständigen Ausstoss vom gasförmigen $CO_2$ in die Atmosphäre. Daneben werden die parasitische Gase ebenfalls in Wirkverbindung mit dem genannten Kühler 14 ausgeschieden, wobei dieser sehr kleine Massenstrom 16 einer weiteren Separation unterworfen werden kann oder an die Atmosphäre abgegeben wird. Im Zusammenhang mit dem Betrieb der Brennkammer 3 wird die in einer Luftzerlegungsanlage 17 produzierte Sauerstoffmenge 18 in einem Kompressor 19 nachkomprimiert und über ein Regelorgan 20 in die Brennkammer 3 eingegeben. Parallel dazu strömt auch ein über ein Regelorgan 22 entsprechend abgestimmter Brennstoff 21, der vorzugsweise Erdgas ist, oder auch andere Kohlenwasserstoffe oder CO oder Gemische derselben, in die Brennkammmer 3, wobei mit der zugegebenen Sauerstoffmenge 18 die kalorische Aufbereitung des komprimierten Umlaufgases 9 bewerkstelligt wird. Das aus der Brennkammer kommende Heissgas wird anschliessend in die nachgeschaltete Turbine 2 entspannt. Im Sinne des hier gezeigten geschlossenen Kreislaufes werden die aus der Turbine 2 abströmenden Abgase 23 durch einen Wärmetauscher 24 geleitet, bevor sie wieder der bereits beschriebenen Kompression zugeführt werden. Aus diesem Wärmetauscher 24 wird das anfallende Wasser 25 über ein Regelorgan 26 ausgeschieden. Bei der hier gezeigten Schaltung handelt es sich streng genommen um einen quasi-geschlossenen Kreislauf, der druckfest ausgebildet ist, wobei bei verschiedenen Betriebsarten auch eine vakuumfeste Kreislaufführung möglich ist. Durch Drosseln oder Öffnen des Überschussgasventils 13 lädt sich der Kreislauf von selbst auf oder ab, wobei der umlaufende Massenstrom und die Leistung entsprechend steigen. Beim Öffnen dieses Ventils 13 sinkt der Druck im Kreislauf, wobei der Unterdruck in der Rückführung erzeugt werden kann. Die Anlage hat im ganzen Druckbetrieb etwa einen konstanten Wirkungsgrad, also bei einem Auslegungsdruckbereich bezogen auf die Rückführung von 0,5 bis 5 bar im Leistungsbereich von 10-100%. Im tieferen Druckbereich sinkt die Kondensationstemperatur im Wärmetauscher 24, was den Wirkungsgrad noch leicht ansteigen lässt. Die von stationären Gasturbinen her bekannte unangenehme Leistungseinbusse mit zunehmender Aufstellungshöhe und mit zunehmender Ansaugtemperatur wird damit umgangen. Wird die Anlage allenfalls mit Überschussabgabe an die Atmosphäre betrieben, so wird der Gesamtwirkungsgrad noch verbessert, indem dessen Ueberdruck noch in einer Turbine mit zusätzlicher Leistungsabgabe genutzt wird. Hierzu wird im einzelnen auf die Beschreibung der nachfolgenden Figuren verwiesen.

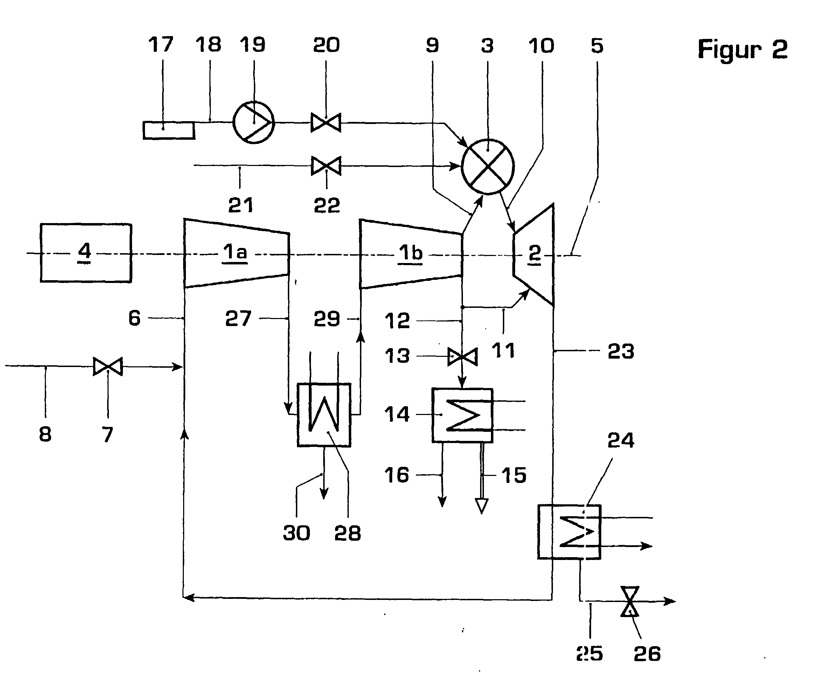

Fig. 2 unterscheidet sich gegenüber Fig. 1 darin, dass hier in Wirkverbindung mit der Kompression eine oder mehrere Zwischenkühlungsstufen vorgenommen werden. Solche Zwischenkühlungen während der Verdichtung gelten als Prozessverbesserungen, die zum Zwecke einer Wirkungsgradsteigerung und/oder Leistungserhöhung vorgesehen werden. Dabei hat die Zwischenkühlung eine Verflachung der Wirkungsgradkurven zur Folge und ist insbesondere interessant bei Anlagen mit hohen Druckverhältnissen. Bei der hier dargestelleten Zwischenkühlung handelt es sich um eine einfachstmögliche Schaltung, indem das zu verdichtende Umlaufmedium 6 nach einer ersten Vorverdichterstufe 1a/27 durch einen Zwischenkühler 28 strömt. Anschliessend wird das zwischenverdichtete und gekühlte Medium 29 in einer zweiten Verdichterstufe 1 b fertig komprimiert. Diese Zwischenkühlung kann auch so ausgelegt sein, dass eine kondensierte Teilmenge 30 des $CO_2$ bereits hier abgeführt werden kann. Eine weitere Zwischenkühlung, welche eine beträchtliche Wirkungsgradsteigerung der Anlage sowie eine bessere Auskondensierung des abzuführenden $CO_2$ ergibt, lässt sich erzielen, indem eine isotherme oder quasi-isotherme Kühlung im Bereich des Verdichtungsprozesses angestrebt wird. Zu diesem Zweck werden im Verdichter Wassereinspritzungen vorgenommen, welche jeweils in der Ebene der Leitbeschaufelung angeordnet sind, und sie sich über der ganzen Höhe des durchströmten Verdichterkanals erstrecken. Mit dieser Massnahme kann auf zusätzliche, Druckverluste aufweisende Komponenten verzichtet werden, wobei sich mit dieser Vorkehrung eine strömungsgerechte Einspritzmöglichkeit des Wassers ergibt. Diese Wassereinspritzungen sind mengenmässig so gehalten, dass dem Kompressionsprozess jeweils nur soviel Wasser zugegeben wird, dass das entstehende Dampf/$CO_2$-Gemisch während der Verdichtung die Wasser-Sättigungslinie nicht überschreitet, und dass das zwischenverdichtete $CO_2$ soweit hinuntergekühlt wird, dass zumindest alles eingespritzte Wasser auskondensierund nach dessen Reinigung wieder als Einspritzwasser verwendet werden kann. Mit diesem Vorgehen lässt sich nahezu kein Wasser verbrauchen. Die restliche Verfahrenschritte dieser Schaltung gemäss Fig. 2 entsprechen den Ausführungen unter Fig. 1.

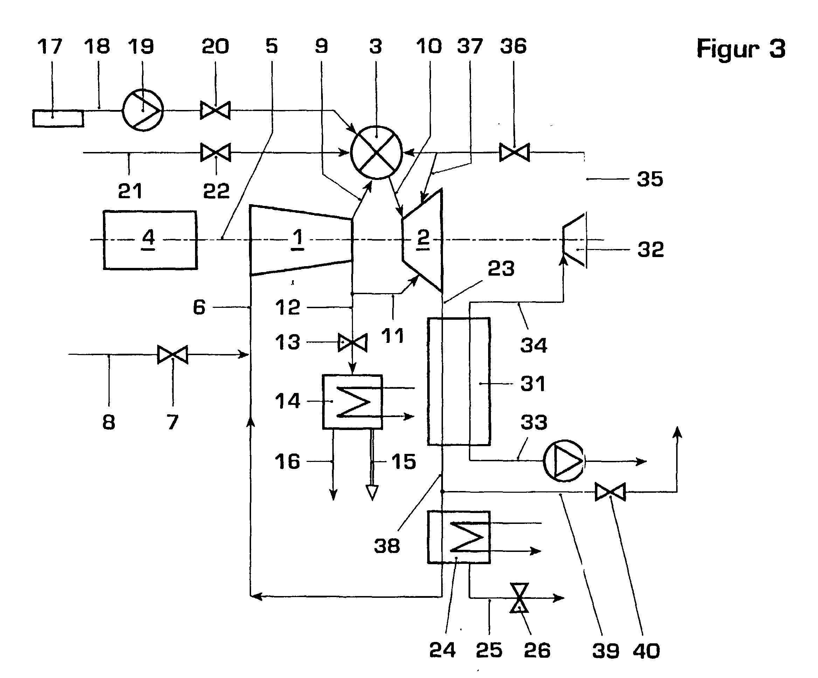

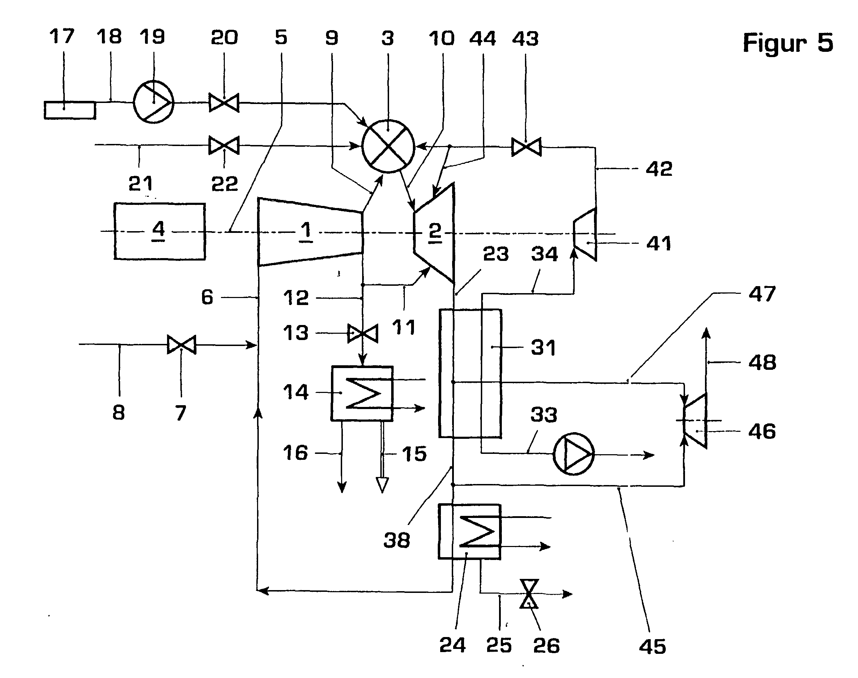

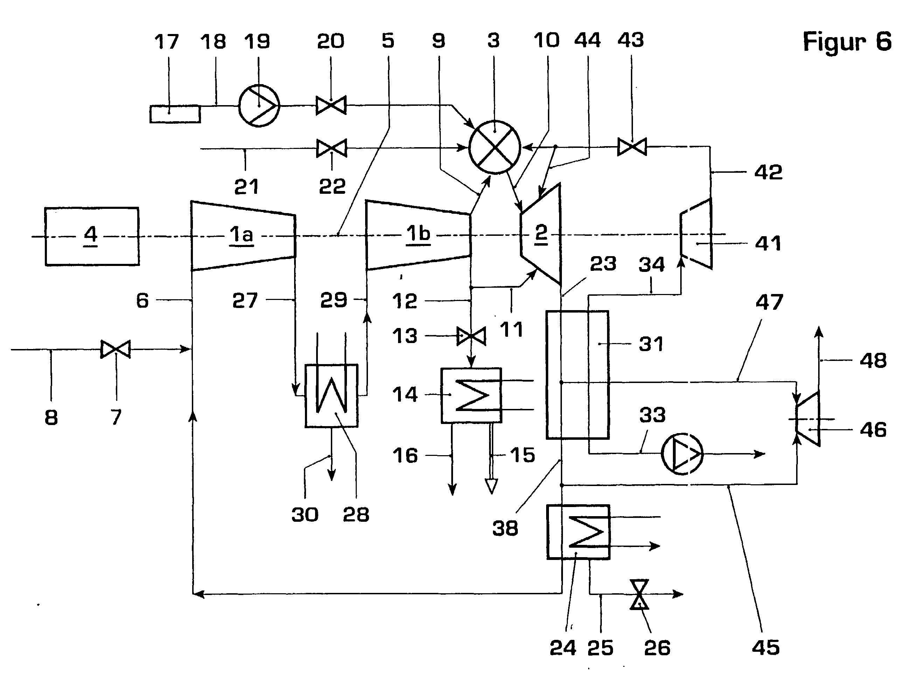

Fig. 3 zeigt eine Gasturbogruppe mit einem Dampfkreislauf. Wesentlich an dieser Schaltung ist auch hier, dass die Gasturbogruppe im geschlossenen Kreislauf operiert. Die Abgase 23 aus der Turbine 2 durchströmen einen Abhitzedampferzeuger 31, in welchem durch Gegenströmung einer durch eine Förderpumpe bereitgestellte Wassermenge 33 eine Dampfmenge 34 erzeugt wird, welche vornehmlich zur Beaufschlagung einer Dampfturbine 32 eingesetzt wird. Anschliessend wird der entspannte Dampf über ein Regelorgan 36 in die Brennkammer 3 eingeleitet, wobei nach Bedarf eine Teilmenge 37 dieses entspannten Dampfes stromab des genannten Regelorgans 36 abgezweigt wird und in die Turbine 2 eingeleitet. Diese Einleitung wird vorzugsweise zur Kühlung der thermisch hochbelasteten Teile dieser Strömungsmaschine eingesetzt und dann in die Strömung eingegeben. Dadurch steigt die Turbinenleistung an, das zusätzlich mit Dampf angereicherte Umlaufgas, hier $CO_2$, erzeugt zusätzlichen Dampf, wodurch die Leistungsdichte ihrerseits stark ansteigt. Wird der ganze Dampf 34 aus dem Abhitzedampferzeuger 31 in die genannten Aggregate der Gasturbogruppe eingespritzt, so entfällt schliesslich die genannte Dampfturbine 32, und die Anlage wird einfacher und kostengünstiger bei einem nur wenige Prozentpunkte tieferen Wirkungsgrad. Hier wird insbesondere auf Schaltungen mit STIG hingewiesen. Der Wirkungsgrad lässt sich dabei noch verbessern, wenn man den Dampf im Abhitzedampferzeuger 31 auf möglichst hohem Druck erzeugt und über eine Dampfturbine mit Leistungsabgabe an die Hauptwelle 5 der Gasturbogruppe oder einen separaten nicht näher gezeichneten Generator abgibt. Eine solche Schaltung wird unter Fig. 5, 6 näher gezeigt und beschrieben. Eine über ein Auslassklappe 40 geregelte Teilmenge 39 des im Abhitzedampferzeuger 31 abgekühlten Umlaufgases 38 wird stromauf des zum geschlossenen resp. quasi-geschlossenen Kreislauf gehörigen Wärmetauschers 24 abgezweigt.

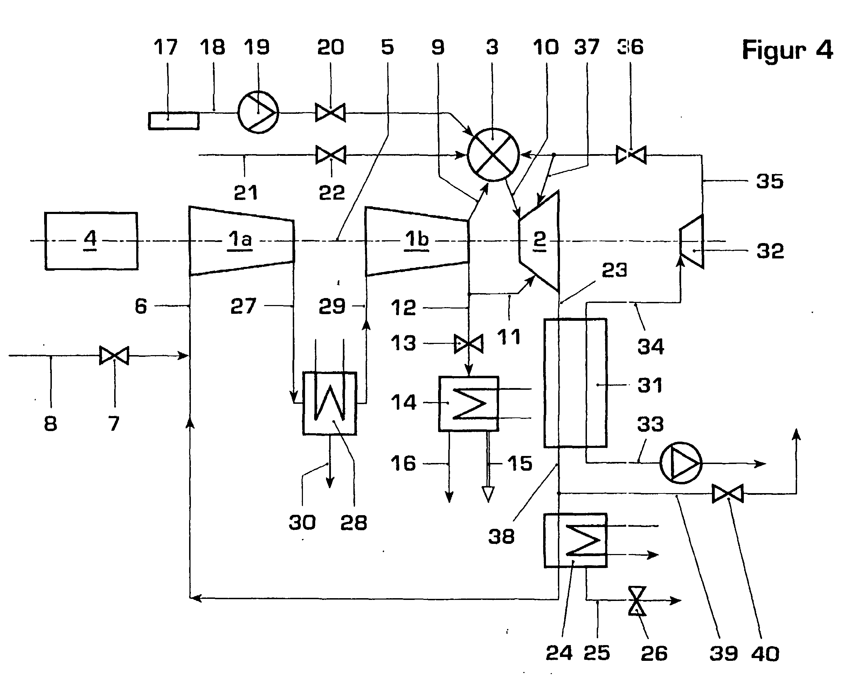

Fig. 4 geht von einer Grundschaltung gemäss Fig. 3 aus, und lehnt sich, was die Zwischenkühlung im Bereich der Verdichtereinheit 1 betrifft, an Fig. 2. Die Ausführungen in den beiden genannten Figuren haben auch hier ihre Gültigkeit und sind intergrierender Bestandteil dieser Fig. 4.

Fig. 5 fusst gewichtig auf Fig. 3, wobei hier die in Wirkverbindung mit dem Abhitzedampferzeuger 31 operierende Dampfturbine 41 mit der Hauptwelle 5 der Gasturbogruppe gekoppelt ist, womit die Leistungsabgabe direkt erfolgt. Der aus dieser Dampfturbine 41 entspannte Dampf 42 wird über ein Regelorgan 43 in die Brennkammer 3 und/oder in die Turbine 2 eingeleitet (Pos. 44). Dadurch steigt die Leistungsdichte stark an. Selbstverständlich kann die Einbringung dieses Dampfes auch an anderen Stellen des Kreislaufs der Gasturbogruppe vorgenommen werden. Mit diesem Dampf 42 ist es femer möglich, im geschlossenen und/oder offenen Strömungspfad die thermisch hochbelasteten Teile der genannten Aggregate 2/3 zu kühlen. Dabei ist zu sagen, dass der Dampf 34 direkt mit dem erforderlichen Druck erzeugt werden kann, oder aber auf einem höheren Druck und dann über das bereits genannte Regelorgan 43 oder entsprechend über die Dampfturbine 41 auf das für die Eindüsung nötige Druckniveau entspannt werden. Die hier gezeigte Schaltung zeigt für den aufgeladenen Betrieb eine zusätzliche Entnahme einer Abgasmenge 47 aus dem Abhitzedampferzeuger 31 und eine Entnahme einer weiteren Abgasmenge 45 stromab des Abhitzedampferzeugers 31. Beide Abgasmengen 45/47 beaufschlagen einen Expander 46, und werden im Nachgang hierzu abgeführt siehe abgeführte Abgasmenge 48, wobei deren Weiterverwendung von Fall zu Fall spezifisch sichergestellt ist. Über diesen Expander 46 lässt sich beispielsweise ein optimale Druck für die Aufladung des Kreislaufes einstellen, wobei in einem solchen. Fall eine Mengegelung vorzusehen ist. Mit dieser Druckregulierung lässt sich auch bei Bedarf eine interdependente Regulierung des Druckes der Hauptdampfmenge 34 erzielen.

Die soeben beschriebene Schaltung lässt sich auch im Sinne einer Kombianlage auslegen, wobei der gemäss dieser Fig. 5 gezeigte Gasturbinenkreislauf, sei es mit oder ohne Zwischenkühlung, die Grundschaltung für eine Kombianlage bildet, die aus EP-0 767 290 A1 hervorgeht.

Fig. 6 geht von einer Grundschaltung gemäss Fig. 5 aus, und lehnt sich, was die Zwischenkühlung im Bereich der Verdichtereinheit 1 betrifft, an Fig. 2. Die Ausführungen in den beidenen genannten Figuren haben auch hier ihre Gültigkeit und sind intergrierender Bestandteil dieser Fig. 6.

Die Gasturbogruppe gemäss einer der Figuren 1-6 lässt sich ohne weiteres durch eine sequentiell befeuerte Anlage gemäss EP-0 620 362 A1 ersetzen,

Diese Gasturbogruppe besteht aus einer Verdichtereinheit, aus einer stromab der Verdichtereinheit wirkenden ersten Brennkammer, aus einer stromab der ersten Brennkammer wirkenden ersten Turbine, aus einer stromab der ersten Turbine wirkenden zweiten Brennkammer, aus einer stromab der zweiten Brennkammer wirkenden zweiten Turbine, wobei die zweite Brennkammer als selbstzündende Brennkammer ausgebildet ist. Die Strömungsmaschinen sind auf einer gemeinsamen Rotorwelle angeordnet und die zweite Brennkammer ist mit wirbelerzeugenden Elementen bestückt.

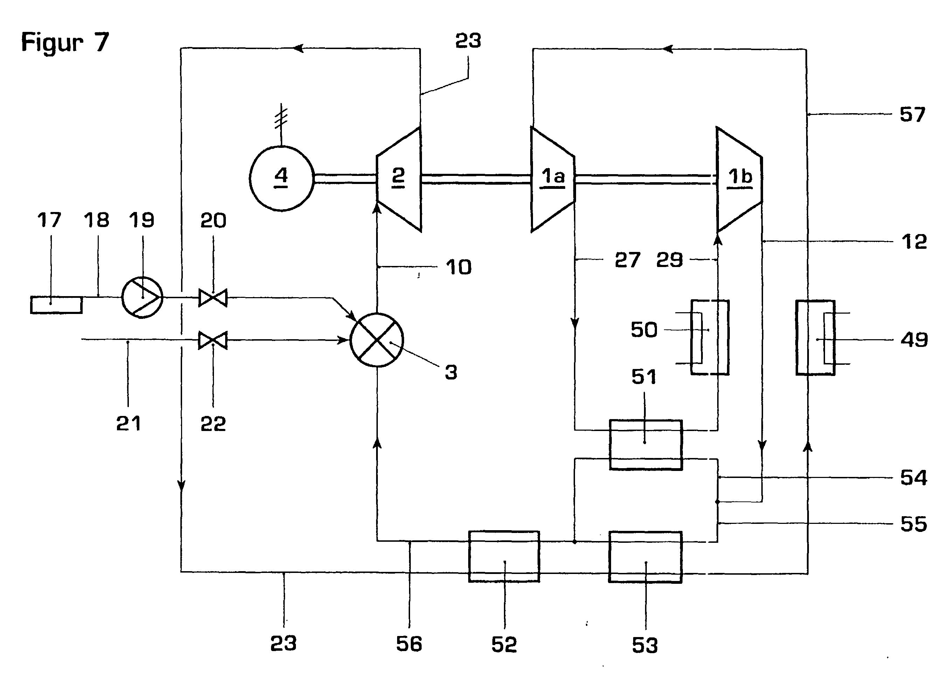

Fig. 7 zeigt einen teilgeschlossenen mit $CO_2$ aufgeladenen Gasturbinenprozess, welcher so betrieben wird, dass der Brennkammer 3 der Brennstoff 21, hier als $CH_4$, und der dazugehörige Oxydator 18, hier als $O_2$, zugeführt wird, wobei auch hier als Ziel feststeht, das entstandene überschüssige $CO_2$ und das $H_2O$ an geeigneter Stelle auszuscheiden. Das ausgeschiedene $CO_2$ hohen Druckes kann dann durch Kühlung leicht verflüssigt werden ($T_k = 31°$ C, $p_k = 74$ bar), was dessen Entsorgung auf dem Meeresgrund gut ermöglicht. $CO_2$ ist ein relativ schweres Gas. Seine spezifische Wärme verändert sich im halbidealen Gaszustand von $c_p$ 0,84 bei 15° C auf $c_p = 1,235$ kJ/kg °C, so dass der Isentropen-Exponent $\kappa$ von 1,29 bei 15° C auf $\kappa = 1,181$ bei 1000° C absinkt. Diese Eigenschaft ergibt sehr hohe Druckverhältnisse für maximal spezifische Arbeit und maximalen Wirkungsgrad. Die Werte liegen um einen Faktor 4 über jenen für Luft. Von daher ist es vorteilhaft, bei einer solchen Schaltung die Einführung eines Zwischenkühlers und eines Rekuperators vorzusehen. Hier ergibt sich dann ein kleines Druckverhältnis von etwa 5 bei 700° C. So gesehen ist des weiteren zu beachten, dass wegen der wesentlich tiefer liegenden Schallgeschwindigkeit von $CO_2$ gegenüber Luft insbesondere der Verdichter für tiefere Umfangsgeschwindigkeit ausgelegt werden muss, als dies für Luft normalerweise üblich ist. Bei Fig. 7 befindet sich die erste

Vorverdichterstufe 1a (ND-Verdichter) noch im in einem Zustand mit einer Gasphase Gas, während der nachgeschaltete Zwischenkühler 50 nahe der Grenzkurve Gas/Dampf/Flüssigkeit verläuft und druckabhängig eine äusserst grosse spezifische Wärme aufweist. Das vorverdichtete Umlaufmedium 27 durchströmt dann einen Rekuperator 51 und anschliessend den bereits genannten Zwischenkühler 50, bevor es in die zweite Verdichterstufe 1 b strömt, in welcher die Endverdichtung vorgenommen wird. In Wirkverbindung mit diesem Zwischenkühler 50 lässt sich durch mässige Weiterkühlung bzw. Wärmeabfuhr sehr einfach das prozessmässige überschüssige $CO_2$ flüssig entziehen. Für diesen Anwendungszweck lässt sich vorteilhafterweise der isobare Abschnitt im Bereich des Zwischenkühlers 50 in die nasse Zone verlegen, so dass das überschüssige $CO_2$ dann schon verflüssigt ist. Dazu ist es notwendig, dass kaltes Kühlwasser von möglichst weniger als 20°C zur Verfügung steht. Das endverdichtete Umlaufgas 12 strömt dann über parallele Stränge 54, 55 durch ebenfalls parallel geschaltete Rekuperatoren 51, 53, in welchen eine zusammengeführte Zwischenvorwärmung stattfindet. Eine Endvorwärmung des Umlaufgases 56 findet dann in einem nachgeschalteten Rekuperator 52, der durch die Abgase 23 aus der Turbine 2 durchströmt wird. Diese Abgase 23 sind des weiteren auch für den bereits genannten Rekuperator 53 zuständig, während der parallel mit dem letztgenannten geschalteten Rekuperator 51 allein von dem vorverdichten Umlaufgas 27 durchströmt wird. Abströmungsseitig der durch die Abgase 23 durchströmten Rekuperatoren 52, 53 ist ein weiterer Zwischenkühler 49 angeordnet, bevor das abgekühlte Umlaufgas 57 von Neuem in die Vorverdichterstufe 1a strömt, womit der Kreislauf nun als geschlossen gilt.

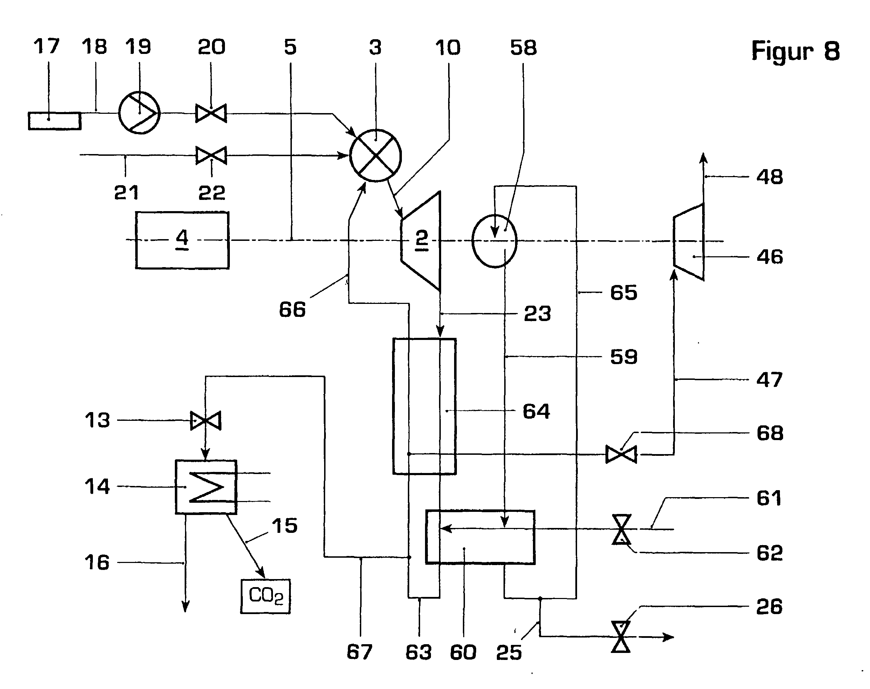

Fig. 8 zeigt einen erfindungsgemässen Gasturbinenprozess mit nachgeschaltetem Dampfkreislauf, wobei hier die Schaltung mit einem Isothermverdichter und Rekuperation erweitert ist. Diese Schaltung nützt hier bei einer Vorzugsausführung einen mit Druckwasser oder Gefälle betriebenen Isothermverdichter. Dieser kann wegen seines intensiven Wärmetausches die Funktion des Nachkühlers gleich mitübernehmen. Ein beschaufelter konventioneller Verdichter entfällt damit. Ein solcher vorzugsweise eingesetzter Isothermverdichter besteht darin, Umlaufgas im Rahmen einer isothermen Verdichtung, bei welcher das Umlaufgas vergleichweise hoch verdichtet werden kann, ohne auf hohe Kompressionstemperaturen zu gelangen, in einen vorverdichteten Zustand zu überführen, so dass diese im Extremfall mindestens unter Vermeidung eines konventionellen Verdichters und somit Fortfall der Notwendigkeit des Antriebes des Verdichters durch die Turbine, direkt für den Antrieb der Gasturbine zur Verfügung steht. Durch diese isotherme Verdichtung wird erreicht, dass die maximal mögliche Wärmezufuhr mit zunehmendem Druckverhältnis nicht abnimmt. Damit bleibt die Leistungsdichte auch bei grossem Druckverhältnis hoch. Ausserdem ist Rekuperation immer möglich. Selbstverständlich ist es moglich, isotherm vorkomprimiertes Umlaufgas einer konventionellen Hochdruckverdichterstufe zuzuleiten. Ein solcher Isothermverdichter bietet sodann verbesserte Eigenschaften hinsichtlich Nutzung der Abwärme der aus der Turbine austretenden Abgase, zumal das Temperaturniveau der hochverdichteten Luft nach Austritt aus einer allenfalls der isothermen Kompression nachgeschalteten Hochdruckverdichterstufe geringer ist, als bei Verdichtern konventioneller Gasturbinenanlagen. Eine Vorzugsausführung dieses Isothermverdichters in Kombination mit einer energieerzeugenden Gasturbine, wie dies aus Fig. 7 hervorgeht, besteht darin, dass ein senkrecht verlaufender Strömungskanal vorgesehen wird, der einen oberen Einlass- und einen unteren Austrittsbereich aufweist, wobei der Durchmesser des Strömungskanals im Bereich des Einlasses grösser ist als der Durchmesser im Bereich des Austrittsbereiches. Im Einlassbereich des Strömungskanals ist eine, das Wasser zerstäubende Düsenordnung angeordnet, welche in grosser Menge eine möglichst grosse Anzahl kleinster Wassertropfen erzeugt. Ebenso ist bei der Wasserzerstäubung im Einlassbereich des Strömungskanals darauf zu achten, dass das zerstäubte Wasser gut mit dem Umlaufgas vermischt wird. Das auf diese Weise erzeugte Umlaufgas/Wasser-Gemisch fällt aufgrund der Gravitation durch den Strömungskanal, dessen Innenkontur dergestalt ausgebildet ist, dass der Bereich nahe der Einlassöffnung eine weitgehend gleichbleibende Querschnittsfläche entlang der vertikalen Erstreckung des Strömungskanals aufweist, so dass sich die Geschwindigkeiten der Strömung des Umlaufgases und der fallenden Tropfenwolke möglichst rasch durch Impulsübertragung angleichen. Sobald das Umlaufgas/Wasser-Gemisch eine bestimmte Fallgeschwindigkeit von 6 bis 12 m/s erreicht hat, verkleinert sich der Querschnitt des Strömungskanals in Fallrichtung, so dass der relative Geschwindigkeitsunterschied zwischen Tropfenwolke und Umlaufgas etwa konstant bleibt. Ohne Bremsung würde die Tropfenwolke mit der Gravitationsbeschleunigt nach unten beschleunigt. Die Geschwindigkeit v würde sich rasch nach der Formel $v = \sqrt{2g\,(x+x_0)}$ erhöhen, wobei g die Gravitationsbeschleunigung bezeichnet und x die nach unten gerichtete Koordinate sei. $x_0$ ist die Konstante, die etwa dem Startpunkt der freien Fallbewegung entspricht. Würde auch das Umlaufgas dem freien Fall folgen, dann müsste die Querschnittsfläche des Kompressionsschachtes nach dem Gesetz der Volumenerhaltung $A = \sqrt{\{x_0/(x+x_0)\} \cdot A_0}$ folgen, wobei $A_0$ die Querschnittsfläche am Anfang des Fallschachtes und A die Querschnittsfläche an einer beliebigen Stelle bezeichnet. Der Querschnitt des Fallschachtes wird aber etwas langsamer verengt gegenüber der letztgenannten Formel. Dabei wird der Verlauf der Verengung gerade so gewählt, dass die Bremswirkung des Umlaufgases auf die Tropfenwolke zu einer konstanten relativen Geschwindigkeitsdifferenz zwischen Tropfen und Umlaufgas führt. Sonach erfährt die Strömungsquerschnittsverringerung das zwischen den Wassertropfen eingeschlossene Umlaufgas nach Bernoulli eine Druckerhöhung, die einer isothermen Kompression entspricht. Schliesslich gelangt das isotherm komprimierte Umlaufgas/Wasser-Gemisch durch die Auslassöffnung des Strömungskanals in ein unmittelbar an der Auslassöffnung vorgesehenes Auffangbekken bzw. Hochdruckkammer, in der sich das Wasser von dem komprimierten Umlaufgas abscheidet.

Eine solche isotherme Kompression wird am Beispiel gemäss in Fig. 8 näher erläutert, wobei hier an Stelle des oben beschriebenen Prozesses eine angetriebene Wasserversorgung zugrundegelegt wird. Was die technisch-physikalischen Aspekte von $CO_2$ als Umlaufgas hinsichtlich Temperatur und Druck für eine optimale Verflüssigung betrifft, wird auf die Ausführungen unter Fig. 7 verwiesen.

Die Bereitstellung des komprimierten Umlaufgases wird hier in Abwandlung obiger Ausführungen durch eine Wasserpumpe 58 eingeleitet, welche sich auf der turbinenmässigen Rotorwelle 5 befindet, also von der Turbine 2 angetrieben wird. Das auf Druck gebrachte Wasser 59 strömt in einen Injektor 60, in welchem eine Verdichtung des zuvor durch einen Rekuperator 64 gekühlten Abgases 23 aus der Turbine 2 stattfindet. Von hier fliesst dann das entpannte Wasser 65 wieder in die Pumpe 58 zurück. Gleichzeitig wird in diesem Injektor 60 eine über ein Regelorgan 62 strömende Luft 61 zum Starten des Prozesses bereitgestellt. Das verdichtete Umlaufgas 63 strömt sodann durch den bereits genannten Rekuperator 64 und nimmt dort die von den Abgasen 23 abgegebenen Wärme auf, bevor dieses dann als aufbereitetes Umlaufgas 66 in die Brennkammer strömt. Eine Teilmenge 67 des im Injektor verdichteten Umlaufgases 63 wird stromauf des Rekuperators 64 abgezweigt und durch einen Kühler 14 geleitet, in welchem in bereits beschriebenen Weise die Kondensation des $CO_2$, stattfindet. Anschliessend erfolgt die Abführung 15 des verflüssigten $CO_2$, sowie der parasitischen Gase 16. Die übrigen Elemente dieser Figur entsprechend der Schaltung gemäss Fig. 5, wobei hier die Dampfleitung 47 aus dem Rekuperator 64 noch mit einem Regelorgan 68 bestückt ist.

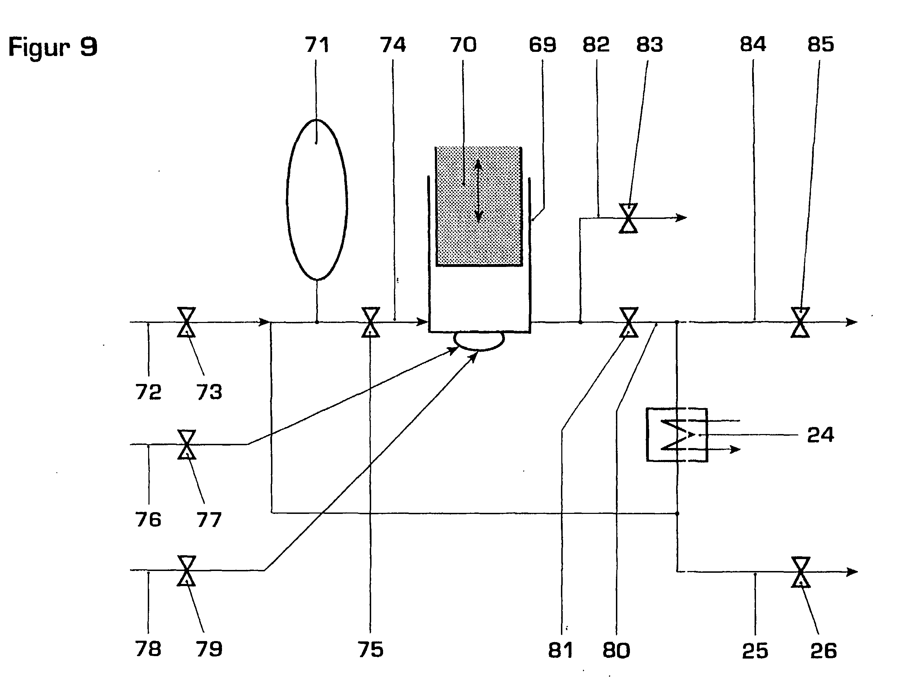

Fig. 9 zeigt eine Schaltung, welcher eine Kolbenmaschine 69/70 zugrundeliegt. Selbstverständlich können hier auch Maschinen mit einem Mehrkolbensystem zum Einsatz gelangen. Beim Ansaugen geht der Kolben 70 nach oben, ein Rezirkulationsgas aus der Leitung 74 und/oder aus dem Speichervolumen 71 wird angesaugt, wobei beim Start selbst Luft 72 aus der Umgebung angesaugt wird. Diese Vorgänge beim Ansaugen resp. Start werden durch entsprechende Regelorgane 73, 75 kontrolliert. Bei der Kompressionsphase geht der Kolben 70 auf zu (Kolben 70 nach unten). Der Arbeitstakt beinhaltet, dass der separat komprimierte Brennstoff 78 durch Regelorgan 79 und Sauerstoff 76 durch Regelorgan 77 im nahstöchiometrischen Verhältnis eingespritzt werden, je nach Druckverhältnis selbst oder fremd gezündet, womit die Expansion (Kolben 70 nach oben) eingeleitet. Beim nachfolgenden Ausstossen geht der Kolben 70 nach unten; bei der Betriebsart auf Rezirkulation ist nur das Ventil 81 zum Kühler offen. Beim Start wird zuerst die Kolbenmaschine angeworfen, gezündet und dann das Abgasventil 85 angedrosselt, wodurch die Rezirkulationsleitung 80 und deren Abzweigung 84 mit Abgas versorgt wird. Allmählich wird auch das Luftansaugventil 73 gedrosselt und die Rezirkulation reichert sich vorwiegend aus $CO_2$ bestehendem Umlaufgas an. Schliesslich werden die beiden mit dem Start in Wirkverbindung stehenden Ventile 73, 85 ganz geschlossen und die Maschine steht im Rezirkulationsbetrieb. Das Überschuss-Umlaufgas, nämlich $CO_2$, kann dem Zyklus grundsätzlich auf zwei Arten entnommen werden: Auf dem untersten Druckniveau über eine mit Regelorgan 83 versehene Leitung 82, welche aus dem Ausstossstrang abzweigt, oder durch ein in den Figur nicht näher gezeigtes Ventil, das vor dem Kühler 24 angeordnet ist. Eine weitere Möglichkeit das Überschuss-Umlaufgas aus dem Zyklus zu entnehmen, besteht darin, in einem geeigneten Abschnitt des Kompressionstaktes unter Druck abzuzweigen, dieses nachzukühlen und zur Kondensation zu bringen. Das dabei entnommene Umlaufgas enthält wenlg abzuführendes Wasser, sofern die Schaltung eine gute Entwässerung 25/26 nach dem Kühler 24 aufweist. Diese Kolbenmaschine braucht im Gegensatz zu einer konventionellen Anlage keine Aufladung zur Leistungssteigerung. Wenn weniger Überschussgas aus dem geschlossenen resp. quasi-geschlossenen Kreislauf entnommen wird, steigt der Prozessdruck in der Rückführung durch Leitung 74 und im Speichervolumen 71 von selbst, und umgekehrt. Auch die hier vorgestellte Maschine braucht, wie bereits erwähnt, einen Kohlenwasserstoff oder Wasserstoff als Brennstoff und entsprechend auch einen Sauerstoff, entweder rein oder als sauerstoffangereicherte Luft. Bei einem Betrieb mit relativ reinem Sauerstoff kommt kein Stickstoff in die Flamme, womit die bei Kolbenmaschinen bekannte $NO_x$-Bildung völlig entfällt.

Die Erfindung, wie sie in den Ansprüchen gekennzeichnet ist, bezeiht sich nur auf die Ausführungsform der Fig. 8.

## Bezugszeichenliste

| | |
|---|---|
| 1 | Verdichtereinheit |
| 1a | Vorverdichter, ND-Verdichter |
| 1b | Feritgverdichter, HD-Verdichter |
| 2 | Turbine |
| 3 | Brennkammer |
| 4 | Generator |
| 5 | Rotorwelle |
| 6 | Angesaugtes Kreislaufmedium, Umlaufgas, $CO_2$ |
| 7 | Startklappe |
| 8 | Luft |
| 9 | Komprimiertes Umlaufgas |
| 10 | Heissgase |
| 11 | Nebenstrom aus verdichtetem Umlaufgas |
| 12 | Nebenstrom aus verdichtetem Umlaufgas |
| 13 | Ventil |
| 14 | Kühler |
| 15 | Verflüssigter $CO_2$-Massenstrom |
| 16 | Parasitische Gase |
| 17 | Luftzerlegungsanlage |
| 18 | Sauerstoffmenge |
| 19 | Kompressor |
| 20 | Regelorgan |
| 21 | Brennstoff, Brenngas, $CH_4$ |
| 22 | Regelorgan |
| 23 | Abgase aus der Turbine, Umlaufgas |
| 24 | Wärmetauscher |
| 25 | Anfallendes Wasser |
| 26 | Regelorgan |
| 27 | Vorverdichtetes Umlaufgas |
| 28 | Zwischenkühler |
| 29 | Vorverdichtetes, gekühltes Umlaufgas |

| | |
|---|---|
| 30 | Kondensierte Teilmenge des $CO_2$ |
| 31 | Abhitzedampferzeuger |
| 32 | Dampfturbine |
| 33 | Wassermenge |
| 34 | Dampfmenge |
| 35 | Entspannte Dampfmenge |
| 36 | Regelorgan |
| 37 | Teilmenge von 35 |
| 38 | Abgekühltes Abgas |
| 39 | Teilmenge von 38 |
| 40 | Auslassklappe |
| 41 | Dampfturbine |
| 42 | Entspannter Dampf |
| 43 | Regelorgan |
| 44 | Teilmenge von 42 |
| 45 | Abgasmenge |
| 46 | Expander |
| 47 | Abgasmenge aus 38 |
| 48 | Abgeführte Abgasmenge aus 46 |
| 49 | Zwischenkühler. |
| 50 | Zwischenkühler |
| 51 | Rekuperator |
| 52 | Rekuperator |
| 53 | Rekuperator |
| 54 | Leitung |
| 55 | Leitung |
| 56 | Leitung zur Brennkammer, erwähmtes Umlaufgas |
| 57 | Abgekühltes Umlaufgas |
| 58 | Wasserpumpe |
| 59 | Druckwasser |
| 60 | Injektor |
| 61 | Luft |
| 62 | Regelorgan |
| 63 | Verdichtetes Umlaufgas |
| 64 | Rekuperator |
| 65 | Entspanntes Wasser |
| 66 | Aufbereitetes Umlaufgas |
| 67 | Teilmenge Umlaufgas |
| 68 | Regelorgan |
| 69/70 | Kolbenmaschine |
| 71 | Speichervolumen |
| 72 | Luft |
| 73 | Regelorgan, Luftansaugventil |
| 74 | Rückführungsleitung |
| 75 | Regelorgan |
| 76 | Sauerstoff |
| 77 | Regelorgan |
| 78 | Brennstoff |
| 79 | Regelorgan |
| 80 | Rezirkulationsleitung, Zyklus |
| 81 | Ventil |
| 82 | Leitung aus dem Ausstossstrang |
| 83 | Regelorgan |
| 84 | Abzweigung aus der Rezirkulationsleitung 80 |
| 85 | Abgasventil |

**Patentansprüche**

1. Kraftwerksanlage,

   - wobei die Kraftwerksanlage mindestens eine Brennkammer (3), eine Gasturbine (2), einen Generator (4) und einen Kühler (14) für die Auskondensierung eines Umlaufgases (23) aufweist,
   - wobei abströmungsseitig der Turbine (2) ein Rekuperator (64) angeordnet ist und
   - wobei die Kraftwerksanlage einen geschlossenen oder quasi-geschlossenen Kreislauf aufweist,

   **dadurch gekennzeichnet**,

   - als isothemer Verdichter für das Umlaufgas (23) vor der Brennkammer (3) ein senkrecht ausgebildeter Strömungskanal angeordnet ist, dessen Einlassbereich grösser ist als der Auslassbereich, und der zwischen Einlass - und Auslassbereich eine Querschnittsverengung erfährt, wobei
   - am Einlassbereich des Strömungskanals eine Düsenanordnung zur Zerstäubung von Wasser angeordnet ist und der Auslassbereich des Strömungskanals mit einem Auffangbecken verbunden ist.

2. Kraftwerksanlage nach Anspruch 1, **dadurch gekennzeichnet, dass** der Rekuperator (64) durch das verdichtete Umlaufgas (63) durchströmt ist, so dass ein Wärmeaustausch mit dem abgekühlten Abgases der Turbine (2) stattfindet.

3. Kraftwerksanlage nach Anspruch 1 oder 2, **dadurch gekennzeichnet, dass** stromauf der Seite des Rekuperators (64), der durch das verdichtete Umlaufgas (63) durchströmt ist, eine Menge Umlaufgas (67) ausscheidbar und auskondensierbar ist.

4. Kraftwerksanlage nach einem der Ansprüche 1 bis 3, **dadurch gekennzeichnet, dass** abströmungsseitig der Turbine (2) ein Kühler (14) oder Wärmetauscher (24) zur Abscheidung einer im Prozess entstehenden Wassermenge (25) angeordnet ist

5. Kraftwerksanlage nach einem der Ansprüche 1 bis 4, **dadurch gekennzeichnet, dass** abströmungsseitig der Gasturbine mindestens ein in Wirkverbindung mit den Abgasen aus der Turbine betriebenen Dampfkreislauf angeordnet ist.

6. Kraftwerksanlage nach Anspruch 5, **dadurch gekennzeichnet, dass** der Dampfkreislauf mindestens aus einem Abhitzedampferzeuger (31) und mindestens einer Dampfturbine (32) besteht.

**7.** Kraftwerksanlage nach einem der Ansprüche 1 bis 6, **dadurch gekennzeichnet, dass** die Gasturbine auf einer sequentiellen Befeuerung aufgebaut ist.

**8.** Kraftwerksanlage nach Anspruch 7, **dadurch gekennzeichnet, dass** die Gasturbine aus einer ersten Brennkammer, aus einer stromab der ersten Brennkammer wirkenden ersten Turbine, aus einer stromab der ersten Turbine wirkenden zweiten Brennkammer, aus einer stromab der zweiten Brennkammer wirkenden zweiten Turbine, und dass die zweite Brennkammer als selbstzündende Brennkammer ausgebildet ist.

**9.** Kraftwerksanlage nach Anspruch 8, **dadurch gekennzeichnet, dass** die Strömungsmaschinen auf einer gemeinsamen Rotorwelle angeordnet sind.

**10.** Kraftwerksanlage nach Anspruch 8, **dadurch gekennzeichnet, dass** die zweite Brennkammer mit wirbeierzeugenden Elementen bestückt ist.

**11.** Kraftwerksanlage nach Anspruch 1, **dadurch gekennzeichnet, dass** die Wasserpumpe (58) von der Turbine (2) angetrieben ist.

**12.** Kraftwerksanlage nach Anspruch 1, **dadurch gekennzeichnet, dass** das Umlaufgas isotherm durch eine Wasserzerstäubungseinrichtung komprimierbar ist.

**13.** Kraftwerksanlage nach Anspruch 12, **dadurch gekennzeichnet, dass** die Wasserzerstäubungseinrichtung ein Hochdruckwasserinjektor ist.

**14.** Kraftwerksanlage nach Anspruch 1, **dadurch gekennzeichnet, dass** die Kraftwerksanlage eine durch Selbst- oder Fremdzündung betreibbbare Kolbenmaschine (69, 70) ist.

**15.** Kraftwerksanlage nach Anspruch 14, **dadurch gekennzeichnet, dass** die Kolbenmaschine ein Viertakt-Verbrennungsmotor ist.

**16.** Kraftwerksanlage nach Anspruch 14, **dadurch gekennzeichnet, dass** das Umlaufgas bedarfsmässig aus einem Speichervolumen (71) entnehmbar ist.

**17.** Kraftwerksanlage nach Anspruch 14, **dadurch gekennzeichnet, dass** das überschüssige Umlaufgas an geeigneter Stelle dem Zyklus (80) zur weiteren Kondensation entnehmbar ist.

**18.** Kraftwerksanlage nach Anspruch 1, **dadurch gekennzeichnet, dass** der Aufladedruck der Kraftwerksanlage durch entsprechende Dosierung der Entnahme des überschüssigen Umlaufgases regelbar ist.

**19.** Verfahren zum Betrieb einer Kraftwerksanlage mit einem $CO_2$-Prozess,

- wobei das Verfahren aus einer Verdichtung eines Umlaufgases, einer Wärmezufuhr, einer Expansion in einer Turbine (2), einer Wärmeabfuhr besteht,
- wobei der $CO_2$-Prozess mit einer inneren Verbrennung betrieben wird,
- wobei neben einem Brennstoff (21) auch der zur Oxidation erforderliche Sauerstoff (18) zugeführt wird, und
- wobei $CO_2$ aus dem Prozess ausgeschieden wird,

**dadurch gekennzeichnet, dass**

- das Umlaufgas (23) zusammen mit Wassertröpfchen durch einen senkrechten verlaufenden Strömungskanal geleitet wird, in welchem dass gebildete Gemisch aufgrund von der Gravitation fällt,
- dass das Umlaufgas (23) während des Falls durch Impulsübertragung von den Wassertröpfchen isotherm verdichtet wird, und
- dass das komprimierte Umlaufgas (23) vom Wasser im einem Auffangbekken getrennt wird.

**20.** Verfahren nach Anspruch 19, **dadurch gekennzeichnet, dass** ein abströmungsseitig der Turbine (2) angeordneter Rekuperator (64) vom verdichteten Umlaufgas (63) durchströmt wird.

**21.** Verfahren nach Anspruch 20, **dadurch gekennzeichnet, dass** stromauf des Rekuperators eine Menge Umlaufgas (67) ausgeschieden und auskondensiert wird.

**22.** Verfahren nach einem der Ansprüche 19 bis 21, **dadurch gekennzeichnet, dass** die Wasserpumpe (58) von der Turbine (2) angetrieben wird.

**23.** Verfahren nach einem der Ansprüche 19 bis 22, **dadurch gekennzeichnet, dass**

- das Umlaufgas isotherm durch eine Wasserzerstäubungseinrichtung komprimiert wird,
- dass diese Wasserzerstäubungseinrichtung das zu komprimierende Umlaufgas mit zerstäubten Wassertropfen vermischt, so dass ein Wasser/Umlaufgas-Gemisch entsteht,
- dass dieses Wasser/Umlaufgas-Gemisch in eine Kammer eintritt, in der sich das Wasser von dem komprimierten Umlaufgas trennt, und

- dass dieses Umlaufgas durch einen weiteren Kanal direkt oder indirekt der Brennkammer (3) zugeführt wird.

**Claims**

1. Power plant,

   - the power plant having at least one combustion chamber (3), a gas turbine (2), a generator (4) and a cooler (14) for condensing out a circulation gas (23),
   - a recuperator (64) arranged on the downstream side of the turbine (2), and
   - the power plant having a closed or quasi-closed circuit,

   **characterized in that**

   - there is arranged as an isothermal compressor for the circulation gas (23), upstream of the combustion chamber (3), a vertically designed flow duct, the inlet region of which is larger than the outlet region, and which undergoes a cross-sectional narrowing between the inlet and the outlet region,
   - a nozzle arrangement for the atomization of water being arranged at the inlet region of the flow duct, and the outlet region of the flow duct being connected to a collecting tank.

2. Power plant according to Claim 1, **characterized in that** the compressed circulation gas (63) flows through the recuperator (64), so that heat exchange takes place with the cooled exhaust gas of the turbine (2).

3. Power plant according to Claim 1 or 2, **characterized in that**, upstream of the side of the recuperator (64) through which the compressed circulation gas (63) flows, a quantity of circulation gas (67) can be separated out and condensed out.

4. Power plant according to one of Claims 1 to 3, **characterized in that** a cooler (14) or heat exchanger (24) for the separation of a water quantity (25) occurring in the process is arranged on the downstream side of the turbine (2).

5. Power plant according to one of Claims 1 to 4, **characterized in that** a steam circuit in operative connection with the exhaust gases from the turbine is arranged on the downstream side of the gas turbine.

6. Power plant according to Claim 5, **characterized in that** the steam circuit consists at least of one waste-heat steam generator (31) and at least one steam turbine (32).

7. Power plant according to one of Claims 1 to 6, **characterized in that** the gas turbine is set up on the basis of sequential firing.

8. Power plant according to Claim 7, **characterized in that** the gas turbine consists of a first combustion chamber, of a first turbine acting downstream of the first combustion chamber, of a second combustion chamber acting downstream of the first turbine and of a second turbine acting downstream of the second combustion chamber, and **in that** the second combustion chamber is designed as a self-igniting combustion chamber.

9. Power plant according to Claim 8, **characterized in that** the turbomachines are arranged on a common rotor shaft.

10. Power plant according to Claim 8, **characterized in that** the second combustion chamber is fitted with vortex-generating elements.

11. Power plant according to Claim 1, **characterized in that** the water pump (58) is driven by the turbine (2).

12. Power plant according to Claim 1, **characterized in that** the circulation gas can be compressed isothermally by means of a water atomization device.

13. Power plant according to Claim 12, **characterized in that** the water atomization device is a high-pressure water injector.

14. Power plant according to Claim 1, **characterized in that** the power plant is a piston engine (69, 70) capable of being operated by self-ignition or spark ignition.

15. Power plant according to Claim 14, **characterized in that** the piston engine is a four-stroke internal combustion engine.

16. Power plant according to Claim 14, **characterized in that** the circulation gas can be extracted, as required, from a storage volume (71).

17. Power plant according to Claim 14, **characterized in that** the excess circulation gas can be extracted at a suitable point from the cycle (80) for further condensation.

18. Power plant according to Claim 1, **characterized in that** the charging pressure of the power plant can be regulated by an appropriate metering of the extraction of the excess circulation gas.

**19.** Method for operating a power plant by means of a $CO_2$ process,

- the method consisting of a compression of a circulation gas, of a heat supply, of an expansion in a turbine (2) and of a heat discharge,
- the $CO_2$ process being operated with internal combustion,
- the oxygen (18) necessary for oxidation also being supplied in addition to a fuel (21), and
- $CO_2$ being separated from the process,

**characterized in that**

- the circulation gas (23) is led, together with water droplets, through a vertically running flow duct, in which the mixture formed falls due to gravitation,
- **in that** the circulation gas (23) is compressed isothermally during the fall by pulse transmission from the water droplets, and
- **in that** the compressed circulation gas (23) is separated from the water in a collecting tank.

**20.** Method according to Claim 19, **characterized in that** the compressed circulation gas (63) flows through a recuperator (64) arranged on the downstream side of the turbine (2).

**21.** Method according to Claim 20, **characterized in that**, upstream of the recuperator, a quantity of circulation gas (67) is separated out and condensed out.

**22.** Method according to one of Claims 19 to 21, **characterized in that** the water pump (58) is driven by the turbine (2).

**23.** Method according to one of Claims 19 to 22, **characterized in that**

- the circulation gas is compressed isothermally by means of a water atomization device,
- **in that** this water atomization device mixes the circulation gas to be compressed with atomized water droplets, so that a water/circulation-gas mixture is obtained,
- **in that** this water/circulation-gas mixture enters a chamber in which the water is separated from the compressed circulation gas, and
- **in that** this circulation gas is supplied through a further duct directly or indirectly to the combustion chamber (3).

**Revendications**

**1.** Centrale d'énergie,

- dans laquelle la centrale d'énergie présente au moins une chambre de combustion (3), une turbine à gaz (2), un générateur (4) et un refroidisseur (14) pour la condensation d'un gaz de circulation (23),
- dans laquelle, du côté de l'échappement de la turbine (2), est disposé un récupérateur (64) et
- dans laquelle la centrale d'énergie présente un circuit fermé ou quasi-fermé,

**caractérisée en ce que**

- un canal d'écoulement réalisé verticalement est disposé avant la chambre de combustion (3) en tant que compresseur isotherme pour le gaz de circulation (23), sa région d'admission étant plus grande que sa région d'échappement, et dont la section transversale est rétrécie entre la région d'admission et la région d'échappement,
- un agencement de buse pour la pulvérisation d'eau étant disposé au niveau de la région d'admission du canal d'écoulement et la région d'échappement du canal d'écoulement étant connectée à un bassin collecteur.

**2.** Centrale d'énergie selon la revendication 1, **caractérisée en ce que** le récupérateur (64) est parcouru par le gaz de circulation comprimé (63), de sorte qu'il se produise un échange de chaleur avec le gaz d'échappement refroidi de la turbine (2).

**3.** Centrale d'énergie selon la revendication 1 ou 2, **caractérisée en ce que**, en amont du côté du récupérateur (64) parcouru par le gaz de circulation comprimé (63), une quantité de gaz de circulation (67) peut être séparée et condensée.

**4.** Centrale d'énergie selon l'une quelconque des revendications 1 à 3, **caractérisée en ce que** du côté de l'échappement de la turbine (2), un refroidisseur (14) ou un échangeur de chaleur (24) est prévu pour séparer une quantité d'eau (25) se formant au cours du processus.

**5.** Centrale d'énergie selon l'une quelconque des revendications 1 à 4, **caractérisée en ce que** du côté de l'échappement de la turbine à gaz au moins un circuit de vapeur est prévu, fonctionnant en liaison coopérante avec les gaz d'échappement sortant de la turbine.

**6.** Centrale d'énergie selon la revendication 5, **caractérisée en ce que** le circuit de vapeur se compose d'au moins un générateur de vapeur à chaleur perdue (31) et d'au moins une turbine à vapeur (32).

7. Centrale d'énergie selon l'une quelconque des revendications 1 à 6, **caractérisée en ce que** la turbine à gaz est construite sur la base d'un chauffage séquentiel.

8. Centrale d'énergie selon la revendication 7, **caractérisée en ce que** la turbine à gaz est réalisée à partir d'une première chambre de combustion, d'une première turbine agissant en aval de la première chambre de combustion, d'une deuxième chambre de combustion agissant en aval de la première turbine, d'une deuxième turbine agissant en aval de la deuxième chambre de combustion et **en ce que** la deuxième chambre de combustion est réalisée sous forme de chambre de combustion à auto-allumage.

9. Centrale d'énergie selon la revendication 8, **caractérisée en ce que** les turbomachines sont disposées sur un arbre de rotor commun.

10. Centrale d'énergie selon la revendication 8, **caractérisée en ce que** la deuxième chambre de combustion est pourvue d'éléments générateurs de tourbillons.

11. Centrale d'énergie selon la revendication 1, **caractérisée en ce que** la pompe à eau (58) est entraînée par la turbine (2).

12. Centrale d'énergie selon la revendication 1, **caractérisée en ce que** le gaz de circulation peut être comprimé de manière isotherme par un dispositif de pulvérisation d'eau.

13. Centrale d'énergie selon la revendication 12, **caractérisée en ce que** le dispositif de pulvérisation d'eau est un injecteur d'eau à haute pression.

14. Centrale d'énergie selon la revendication 1, **caractérisée en ce que** la centrale d'énergie est une machine à piston (69, 70) pouvant fonctionner par auto-allumage ou par allumage commandé.

15. Centrale d'énergie selon la revendication 14, **caractérisée en ce que** la machine à piston est un moteur à combustion interne à quatre temps.

16. Centrale d'énergie selon la revendication 14, **caractérisée en ce que** le gaz de circulation peut être prélevé au besoin d'un volume d'accumulateur (71).

17. Centrale d'énergie selon la revendication 14, **caractérisée en ce que** le gaz de circulation en excès peut être prélevé en un endroit approprié dans le cycle (80) en vue d'une condensation ultérieure.

18. Centrale d'énergie selon la revendication 1, **caractérisée en ce que** la pression de suralimentation de la centrale d'énergie peut être régulée par un dosage correspondant du prélèvement du gaz de circulation en excès.

19. Procédé pour faire fonctionner une centrale d'énergie avec un cycle de $CO_2$,

   - dans lequel le procédé se compose d'une compression d'un gaz de circulation, d'une alimentation de chaleur, d'une détente dans une turbine (2), d'une évacuation de chaleur,
   - dans lequel le cycle de $CO_2$ fonctionne avec une combustion interne,
   - dans lequel en plus d'un combustible (21), on alimente aussi l'oxygène (18) nécessaire à l'oxydation, et
   - dans lequel le $CO_2$ est éliminé du cycle,

   **caractérisé en ce que**

   - le gaz de circulation (23) conjointement avec des gouttelettes d'eau est guidé à travers un canal d'écoulement s'étendant verticalement, dans lequel le mélange formé tombe sous l'effet de la gravité,
   - **en ce que** le gaz de circulation (23), pendant sa chute, est comprimé de manière isotherme par transfert d'impulsions des gouttelettes d'eau, et
   - **en ce que** le gaz de circulation comprimé (23) est séparé de l'eau dans un bassin collecteur.

20. Procédé selon la revendication 19, **caractérisé en ce que** un récupérateur (64) disposé du côté de l'échappement de la turbine (2) est parcouru par du gaz de circulation comprimé (63).

21. Procédé selon la revendication 20, **caractérisé en ce que** une quantité de gaz de circulation (67) est éliminée et condensée en amont du récupérateur.

22. Procédé selon l'une quelconque des revendications 19 à 21, **caractérisé en ce que** la pompe à eau (58) est entraînée par la turbine (2).

23. Procédé selon l'une quelconque des revendications 19 à 22, **caractérisé en ce que**

   - le gaz de circulation est comprimé de manière isotherme par un dispositif de pulvérisation d'eau,

- **en ce que** ce dispositif de pulvérisation d'eau mélange le gaz de circulation à comprimer avec des gouttes d'eau pulvérisées, de sorte qu'il se produise un mélange eau/gaz de circulation,
- **en ce que** ce mélange eau/gaz de circulation entre dans une chambre dans laquelle l'eau se sépare du gaz de circulation comprimé et
- **en ce que** ce gaz de circulation est acheminé directement ou indirectement par un autre canal à la chambre de combustion (3).

Figur 1

EP 0 939 199 B1

Figur 2

Figur 3

EP 0 939 199 B1

**Figur 4**

EP 0 939 199 B1

Figur 5

EP 0 939 199 B1

**Figur 6**

EP 0 939 199 B1

Figur 7

**Figur 8**

EP 0 939 199 B1

Figur 9

EP 0 939 199 B1